# EUROPEAN PATENT APPLICATION

(11) **EP 4 804 095 A1**
(43) Date of publication of application: **09.09.2026**
(21) Application number: 23962099.0
(22) Date of filing: 18.12.2023
(51) Int. Cl.: G06Q 10/20

(54) **UPDATE PLANNING DEVICE, UPDATE PLANNING METHOD, AND UPDATE PLANNING PROGRAM**

(71) Applicant: Mitsubishi Electric Corporation, Tokyo 100-8310 (JP)
(72) Inventor: NISHIDE, Kyohei, Tokyo 100-8310 (JP); GOTO, Kei, Tokyo 100-8310 (JP); YAMAJI, Yudai, Tokyo 100-8310 (JP)
(74) Representative: Plasseraud IP
(86) International application number: PCT/JP2023/045168
(87) International publication number: WO 2025/134172

(57) **Abstract**

A plan creation unit (21) creates, for each combination of one of a plurality of upper limit ratios and one of a plurality of lower limit ratios, an update plan indicating a timing for updating each of a plurality of components constituting a facility. The plan creation unit (21) creates an update plan in which, for each of the plurality of components as a subject component, the timing for updating the subject component is set within a period between a use lower limit and a use upper limit, inclusive, the use upper limit being obtained by multiplying the life of the subject component by an upper limit ratio of a subject combination, the use lower limit being obtained by multiplying the life of the subject component by a lower limit ratio of the subject combination. A presentation unit (24) presents the created update plan for each combination.

## Description

### Technical Field

The present disclosure relates to technology that supports creation of a renewal plan of a part.

### Background Art

A maintenance plan in which timing for performing maintenance of equipment is defined is created, and the maintenance of the equipment is performed according to the maintenance plan. Depending on the timing of performing the maintenance, a cost for maintenance and a risk of a failure vary.

Technology for formulating a maintenance plan in which both an overall cost and a risk for maintenance are minimal is mentioned in Patent Literature 1. In Patent Literature 1, after formulating one maintenance plan that satisfies a constraint, the maintenance plan is improved through crossover and mutation in a way to satisfy the constraint to create a plurality of maintenance plans, which are then presented to a user.

### Citation List

### Patent Literature

Patent Literature 1: JP 2005-157793 A

### Summary of Invention

### Technical Problem

Patent Literature 1 is for creating a maintenance plan for entirety of equipment in a way to satisfy the constraint. In Patent Literature 1, a period in which the maintenance is performed is included in the constraint. Consequently, for the maintenance plan that is created in Patent Literature 1, a plan is created in which the maintenance will certainly be performed in a period that the constraint indicates.

In a case where a renewal plan for each of parts that configure one piece of equipment is to be formulated, formulating the renewal plan for a part using a lifespan defined for each of the parts can be conceived. For example, various renewal plans may be considered, such as a renewal plan where a part is used throughout its lifespan in exchange for tolerating a failure risk, and a renewal plan where a part is replaced early in its lifespan to lower the failure risk. A kind of renewal plan that is preferable differs depending on a preference of a user.

The present disclosure aims to make possible presentation of a plurality of renewal plans that are for each of the parts that configure one piece of equipment and that support preferences of various users.

### Solution to Problem

A renewal planning apparatus according to the present disclosure includes:
a plan creation unit to create a renewal plan that indicates renewal timing of each of a plurality of parts that configure equipment for each of combinations of each of a plurality of upper limit ratios and each of a plurality of lower limit ratios, and with each of the plurality of parts as a target part, to create a renewal plan to which renewal timing of the target part is set in a period less than or equal to a usage upper limit that is obtained by multiplying a lifespan of the target part by an upper limit ratio in a target combination, and that is more than or equal to a usage lower limit that is obtained by multiplying the lifespan of the target part by a lower limit ratio in the target combination; and
a presentation unit to present, for each of the combinations, the renewal plan that is created by the plan creation unit.

### Advantageous Effects of Invention

In the present disclosure, each of combinations of each of a plurality of upper limit ratios and each of a plurality of lower limit ratios is set as a target combination. Then, for the target combination, a renewal plan is created that renews a part in a period that is less than or equal to a usage upper limit that is a lifespan of the part multiplied by an upper limit ratio, and that is more than or equal to a usage lower limit that is obtained by multiplying the lifespan of the part by a lower limit ratio. Thus, a plurality of renewal plans that support preferences of various users are created and presented.

### Brief Description of Drawings

Fig. 1 is a configuration diagram of a renewal planning apparatus 10 according to Embodiment 1.
Fig. 2 is a flow chart illustrating a flow of a process of the renewal planning apparatus 10 according to Embodiment 1.
Fig. 3 is an explanatory diagram of a plan creation process according to Embodiment 1.
Fig. 4 is an explanatory diagram of the plan creation process according to Embodiment 1.
Fig. 5 is an explanatory diagram of a presentation process according to Embodiment 1.
Fig. 6 is an explanatory diagram of the presentation process according to Embodiment 1.
Fig. 7 is a flow chart illustrating a flow of the plan creation process according to Embodiment 1.
Fig. 8 is an explanatory diagram of a plan searching process according to Embodiment 1.
Fig. 9 is an explanatory diagram of the plan searching process according to Embodiment 1.
Fig. 10 is an explanatory diagram of the plan searching process according to Embodiment 1.
Fig. 11 is a configuration diagram of a renewal planning apparatus 10 according to Embodiment 2.
Fig. 12 is a flow chart illustrating a flow of a process of the renewal planning apparatus 10 according to Embodiment 2.
Fig. 13 is an explanatory diagram of a method of converting an outage period into a cost according to Embodiment 2.
Fig. 14 is an explanatory diagram of a name-giving process according to Embodiment 2.
Fig. 15 is a configuration diagram of a renewal planning apparatus 10 according to Embodiment 3.
Fig. 16 is a flow chart illustrating a flow of a process of the renewal planning apparatus 10 according to Embodiment 3.
Fig. 17 is an explanatory diagram of an effect of Embodiment 3.
Fig. 18 is an explanatory diagram of a presentation process according to Variation 4.

### Description of Embodiments

### Embodiment 1.

### *** Description of Configuration ***

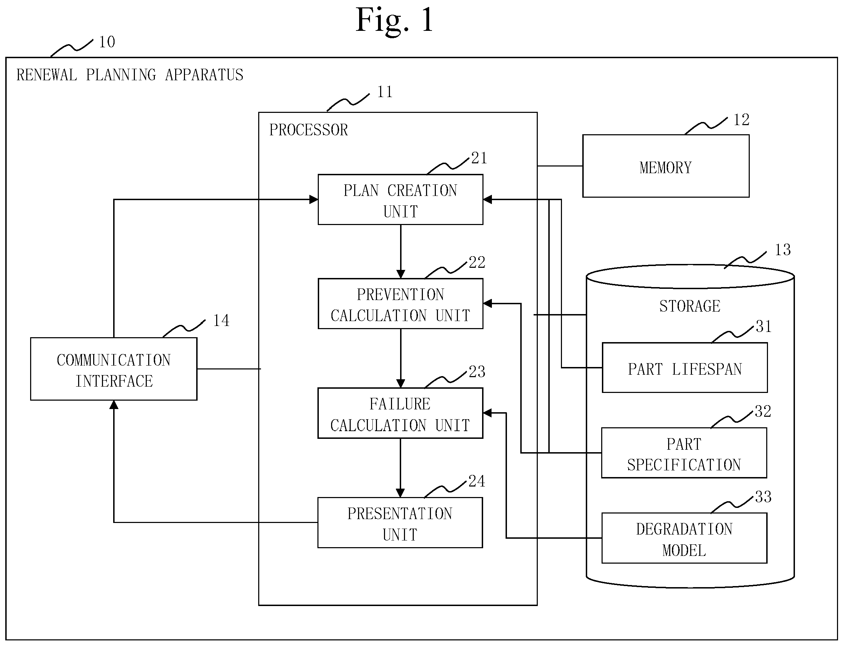

A configuration of a renewal planning apparatus 10 according to Embodiment 1 will be described by referring to Fig. 1.

The renewal planning apparatus 10 is a computer.

The renewal planning apparatus 10 includes hardware such as a processor 11, a memory 12, storage 13, and a communication interface 14. The processor 11 is connected to other pieces of hardware through a signal line and controls these other pieces of hardware.

The processor 11 is an IC that performs processing. IC is an abbreviation for Integrated Circuit. The processor 11, as a specific example, is a CPU, a DSP, or a GPU. CPU is an abbreviation for Central Processing Unit. DSP is an abbreviation for Digital Signal Processor. GPU is an abbreviation for Graphics Processing Unit.

The memory 12 is a storage device to temporarily store data. The memory 12, as a specific example, is an SRAM or a DRAM. SRAM is an abbreviation for Static Random Access Memory. DRAM is an abbreviation for Dynamic Random Access Memory.

The storage 13 is a storage device to keep data. The storage 13, as a specific example, is an HDD. HDD is an abbreviation for Hard Disk Drive. The storage 13 may also be a portable recording medium such as an SD (registered trademark) memory card, a CompactFlash (registered trademark), a NAND flash, a flexible disk, an optical disc, a compact disc, a Blu-ray (registered trademark) disc, or a DVD. SD is an abbreviation for Secure Digital. DVD is an abbreviation for Digital Versatile Disk.

The communication interface 14 is an interface for communicating with an external device. The communication interface 14, as a specific example, is a port of Ethernet (registered trademark), USB, or HDMI (registered trademark). USB is an abbreviation for Universal Serial Bus. HDMI is an abbreviation for High-Definition Multimedia Interface.

The renewal planning apparatus 10 includes, as functional elements, a plan creation unit 21, a prevention calculation unit 22, a failure calculation unit 23, and a presentation unit 24. Functions of each functional element of the renewal planning apparatus 10 are enabled by software.

In the storage 13, a program that enables the functions of each functional element of the renewal planning apparatus 10 is stored. This program is read into the memory 12 by the processor 11, and executed by the processor 11. Thus, the functions of each functional element of the renewal planning apparatus 10 are enabled.

A part lifespan 31, a part specification 32, and a degradation model 33 are stored in the storage 13. The part lifespan 31 indicates a lifespan of each of parts that configure equipment. The part specification 32 indicates a specification that includes a price, a renewal labor fee, and time necessary for renewal of each of the parts that configure the equipment. Here, at least some of the parts that configure the equipment have an inclusion relationship where a parent part that is a certain part includes a child part that is a different part. The part specification 32 also indicates this inclusion relationship. The degradation model 33 is a model that indicates an occurrence probability of a failure in accordance with the number of elapsed years for each of the parts that configure the equipment.

In Fig. 1, only one processor 11 was illustrated. There may, however, be a plurality of processors 11, and the plurality of processors 11 may cooperatively execute the program that enables each function.

### *** Description of Operation ***

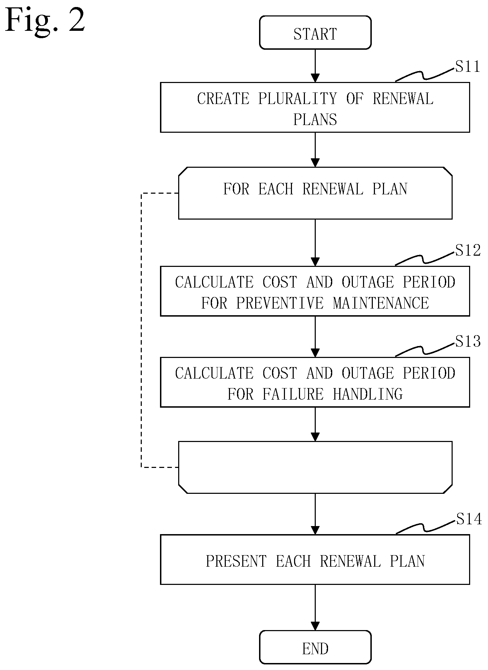

Operation of the renewal planning apparatus 10 according to Embodiment 1 will be described by referring to Fig. 2 to Fig. 10.

An operation procedure of the renewal planning apparatus 10 according to Embodiment 1 is equivalent to a renewal planning method according to Embodiment 1. A program that enables the operation of the renewal planning apparatus 10 according to Embodiment 1 is equivalent to a renewal planning program according to Embodiment 1.

A flow of a process of the renewal planning apparatus 10 according to Embodiment 1 will be described by referring to Fig. 2.

### (Step S11: Plan Creation Process)

The plan creation unit 21 sets a plurality of upper limit ratios and a plurality of lower limit ratios. The plan creation unit 21 sets each of combinations of each of the plurality of upper limit ratios and each of the plurality of lower limit ratios as a target combination. Here, the plan creation unit 21 excludes from target combinations, a combination of which a lower limit ratio is greater than an upper limit ratio.

The plan creation unit 21 sets each of a plurality of parts that configure the equipment as a target part. The plan creation unit 21 calculates a usage upper limit by multiplying a lifespan of the target part that the part lifespan 31 indicates by an upper limit ratio in the target combination. The plan creation unit 21 calculates a usage lower limit by multiplying the lifespan of the target part that the part lifespan 31 indicates by a lower limit ratio in the target combination. The plan creation unit 21 creates a renewal plan that renews the target part in a period that is less than or equal to the usage upper limit and more than or equal to the usage lower limit. That is, the usage upper limit is an upper limit of a period of which the part can be used, and the usage lower limit is a minimum period of which the part is to be used. At this time, in a case where there is the inclusion relationship, the plan creation unit 21 creates a renewal plan that regards the child part as also being renewed when the parent part is renewed.

Here, the plan creation unit 21 creates a renewal plan for a period until a use-by date of the equipment. For example, in a case where the use-by date of the equipment is 25 years from installation, the plan creation unit 21 creates a renewal plan for a current point in time until a twenty-fifth year from the installation of the equipment.

Renewal of a part specifically means replacing the part or performing maintenance.

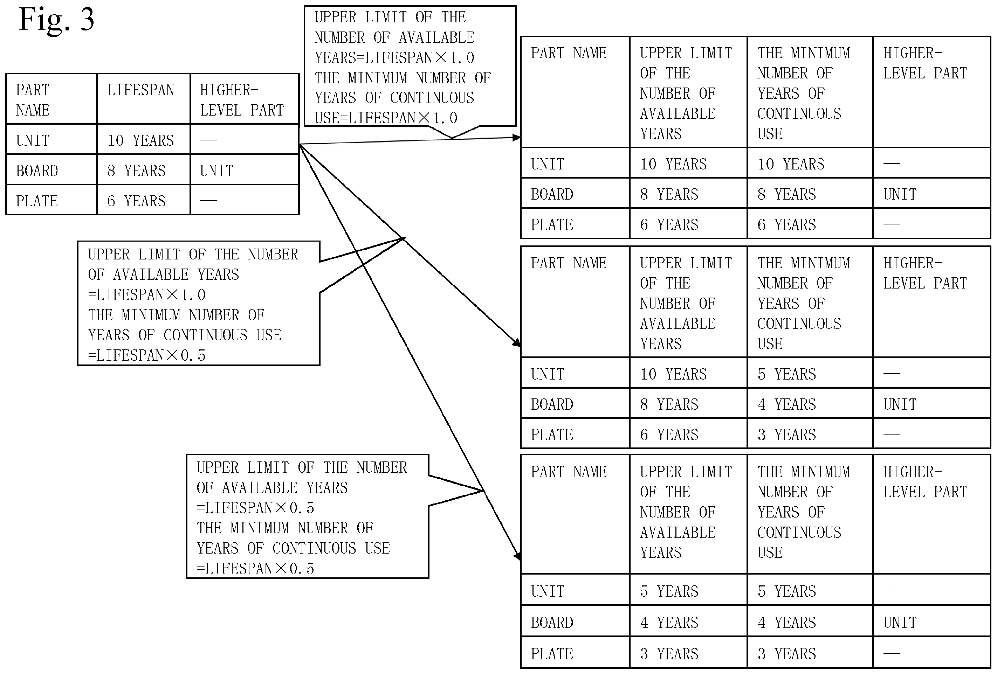

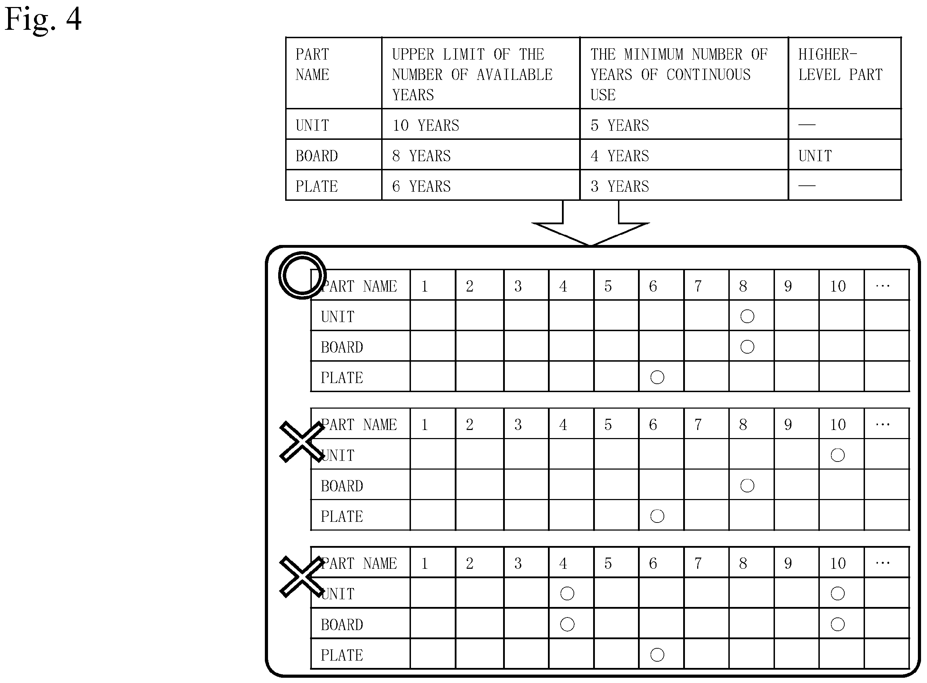

Specific examples will be described by referring to Fig. 3 and Fig. 4.

As parts that configure the equipment, there are a unit, a board, and a plate. A lifespan of the unit is 10 years, a lifespan of the board is 8 years, and a lifespan of the plate is 6 years. The unit is a parent part of the board.

In Fig. 3, a combination of which the upper limit ratio is 1.0 and the lower limit ratio is 1.0, a combination of which the upper limit ratio is 1.0 and the lower limit ratio is 0.5, and a combination of which the upper limit ratio is 0.5 and the lower limit ratio is 0.5 are illustrated.

In the combination of which the upper limit ratio is 1.0 and the lower limit ratio is 1.0, a usage upper limit of the unit is 10 years and a usage lower limit of the unit is 10 years. A usage upper limit of the board is 8 years and the usage lower limit of the board is 8 years. A usage upper limit of the plate is 6 years and the usage lower limit of the plate is 6 years. In the combination of which the upper limit ratio is 1.0 and the lower limit ratio is 0.5, the usage upper limit of the unit is 10 years and the usage lower limit of the unit is 5 years. The usage upper limit of the board is 8 years and the usage lower limit of the board is 4 years. The usage upper limit of the plate is 6 years and the usage lower limit of the plate is 3 years. In the combination of which the upper limit ratio is 0.5 and the lower limit ratio is 0.5, the usage upper limit of the unit is 5 years and the usage lower limit of the unit is 5 years. The usage upper limit of the board is 4 years and the usage lower limit of the board is 4 years. The usage upper limit of the plate is 3 years and the usage lower limit of the plate is 3 years.

The plan creation unit 21 creates a renewal plan for each of these combinations.

A case is considered where a renewal plan for the combination of which the upper limit ratio is 1.0 and the lower limit ratio is 0.5 is to be created. In this case, a condition of which the target part is renewed in the period that is less than or equal to the usage upper limit and more than or equal to the usage lower limit, and of which the child part is also renewed when the parent part is renewed is necessary to be satisfied. Then, as illustrated in Fig. 4, renewal plan A is created as a renewal plan that satisfies the condition. On the other hand, renewal plan B and renewal plan C do not satisfy the condition. Renewal plan B does not satisfy the condition because the board that is the child part is not renewed at renewal time of the unit. Renewal plan C does not satisfy the condition because, although the usage lower limit of the unit is 5 years, renewal is in 4 years.

Processes of step S12 and step S13 are executed with each of renewal plans that are created in step S11 as a target.

### (Step S12: Prevention Calculation Process)

The prevention calculation unit 22 calculates a cost and an outage period for preventive maintenance in a case where the plurality of parts that configure the equipment are renewed in a target renewal plan. Here, the prevention calculation unit 22 calculates a cost and an outage period for the period until the use-by date of the equipment.

Specifically, the prevention calculation unit 22 obtains the price, the renewal labor fee, and the time necessary for the renewal of each part by referring to the part specification 32. The prevention calculation unit 22 calculates the cost for the preventive maintenance based on the price and the renewal labor fee of the part, and calculates the outage period based on the time necessary for the renewal. Existing technology may be used for a calculation method of the cost and the outage period for the preventive maintenance.

### (Step S13: Failure Calculation Process)

The failure calculation unit 23 calculates a cost and an outage period for failure handling in a case where the plurality of parts that configure the equipment are renewed in the target renewal plan. Here, the failure calculation unit 23 calculates the cost and the outage period for the period until the use-by date of the equipment.

Specifically, the failure calculation unit 23 performs a failure simulation using the degradation model 33 that indicates the occurrence probability of a failure according to the number of elapsed years for each part that configures the equipment. Existing technology may be used for the failure simulation. Thus, the cost and the outage period for the failure handling is calculated.

### (Step S14: Presentation Process)

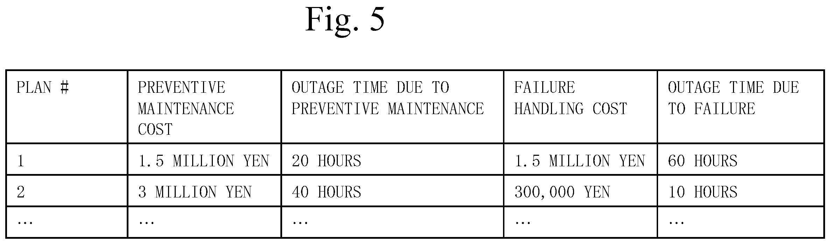

As illustrated in Fig. 5, the presentation unit 24 presents each of the renewal plans that are created in step S11. At this time, the presentation unit 24, for each of the renewal plans, presents the cost and the outage period for the preventive maintenance that are calculated in step S12, and the cost and the outage period for the failure handling that are calculated in step S13.

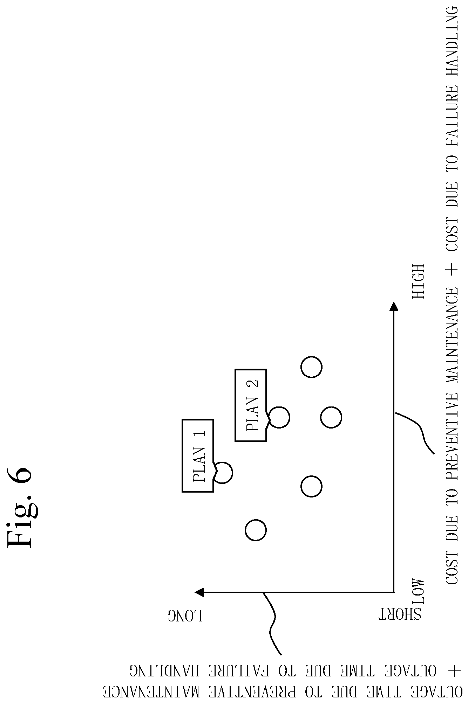

As illustrated in Fig. 6, the presentation unit 24 may present each renewal plan by plotting each renewal plan in a two-dimensional space with an axis of a sum of the cost for the preventive maintenance and the cost for the failure handling, and an axis of a sum of the outage period for the preventive maintenance and the outage period for the failure handling.

A user selects the renewal plan that suits the user's preference from a plurality of renewal plans that are presented.

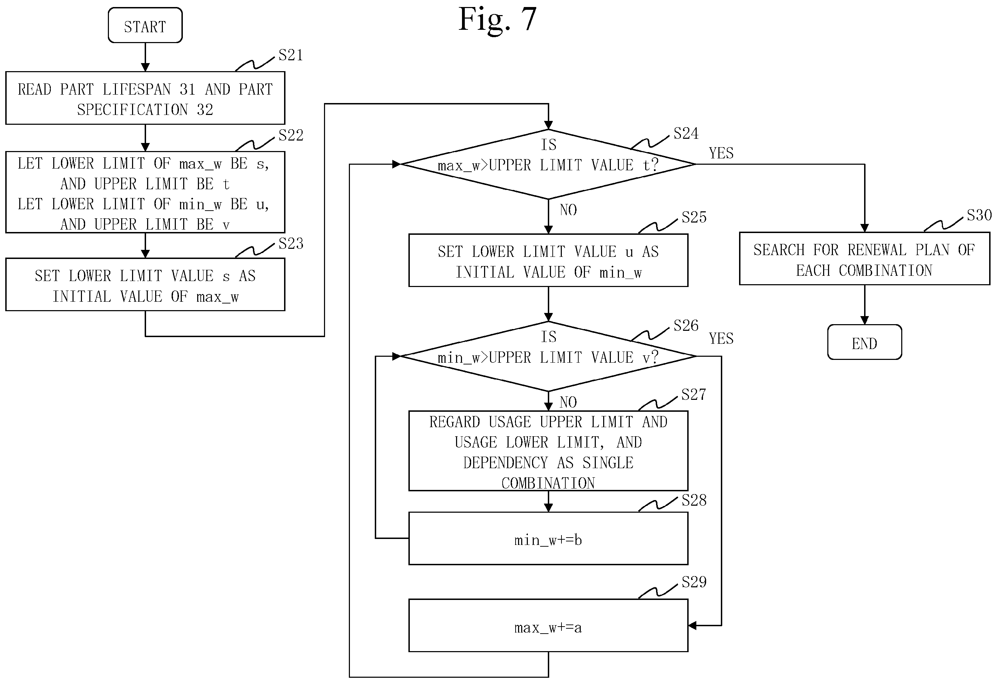

The plan creation process according to Embodiment 1 (step S11 of Fig. 2) will be described by referring to Fig. 7.

Here, a case where the upper limit ratio is set at intervals of value a, and the lower limit ratio is set at intervals of value b will be described. The upper limit ratio and the lower limit ratio are not necessary to be set at intervals of a constant value.

### (Step S21: Data Reading Process)

The plan creation unit 21 reads the part lifespan 31 and the part specification 32.

### (Step S22: Variable Setting Process)

The plan creation unit 21 sets a lower limit value and an upper limit value of an upper limit ratio max_w as s and t, respectively. The plan creation unit 21 sets a lower limit value and an upper limit value of a lower limit ratio min_w as u and v, respectively.

### (Step S23: Upper Limit Initialization Process)

The plan creation unit 21 sets a lower limit value s as an initial value of the upper limit ratio max_w.

### (Step S24: Upper Limit Determination Process)

The plan creation unit 21 determines whether or not the upper limit ratio max_w is greater than the upper limit value t.

In a case where the upper limit ratio max_w is greater than the upper limit value t, the plan creation unit 21 proceeds with the process to step S30. On the other hand, in a case where the upper limit ratio max_w is less than or equal to the upper limit value t, the plan creation unit 21 proceeds with the process to step S25.

### (Step S25: Lower Limit Initialization Process)

The plan creation unit 21 sets the lower limit value u as an initial value of the lower limit ratio min_w.

### (Step S26: Lower Limit Determination Process)

The plan creation unit 21 determines whether or not the lower limit ratio min_w is greater than the upper limit value v.

In a case where the lower limit ratio min_w is greater than the upper limit value v, the plan creation unit 21 proceeds with the process to step S29. On the other hand, in a case where the lower limit ratio min_w is less than or equal to the upper limit value v, the plan creation unit 21 proceeds with the process to step S27.

### (Step S27: Combination Setting Process)

The plan creation unit 21, for each part, sets a usage upper limit of that part by multiplying a lifespan of the part by the upper limit ratio max_w. The plan creation unit 21, for each part, sets a usage lower limit of that part by multiplying the lifespan of the part by the lower limit ratio min_w. The plan creation unit 21 identifies dependency between parts.

Then, the plan creation unit 21 sets the usage upper limit and the usage lower limit of each part and the dependency between the parts together as a single combination.

### (Step S28: Lower Limit Renewal Process)

The plan creation unit 21 increases the lower limit ratio min_w by the value b. Then, the plan creation unit 21 returns the process to step S26.

### (Step S29: Upper Limit Renewal Process)

The plan creation unit 21 increases the upper limit ratio max_w by the value a. Then, the plan creation unit 21 returns the process to step S24.

### (Step S30: Plan Searching Process)

The plan creation unit 21 sets each combination that is set in step S27 as the target combination. The plan creation unit 21, for the target combination, searches for a renewal plan that satisfies a condition of which the target part is renewed in the period that is less than or equal to the usage upper limit and more than or equal to the usage lower limit, and in a case where there is the inclusion relationship, when the parent part is renewed, the child part is also renewed.

There is a case where a plurality of renewal plans are specified for one combination. In Embodiment 1, the plan creation unit 21 identifies all renewal plans.

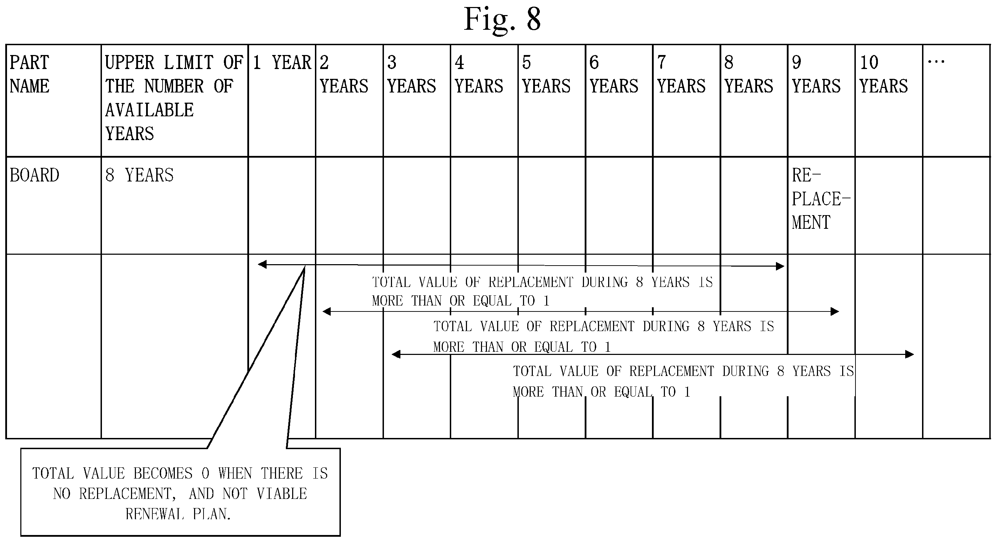

The plan searching process according to Embodiment 1 (step S30 of Fig. 7) will be described by referring to Fig. 8 to Fig. 10.

The plan creation unit 21 sets as follows, a constraint condition of which the target part is renewed in the period that is less than or equal to the usage upper limit and more than or equal to the usage lower limit, and in a case where there is the inclusion relationship, when the parent part is renewed, the child part is also renewed. Here, a description will be given where a renewal plan is regarded as being created that indicates which year the renewal will be performed. Even in a case of creating a renewal plan that indicates which month the renewal will be performed and not which year the renewal will be performed, the process can be performed similarly.

As a premise for setting the condition, the plan creation unit 21, for each part, is regarded as setting 1 in a case where the part is to be renewed, and 0 in a case where the part is not to be renewed, for each year until the use-by date of the equipment.

A setting method for Condition 1 of which the target part is to be renewed in the period that is less than or equal to the usage upper limit will be described by referring to Fig. 8.

The plan creation unit 21 sets a condition of which the number of times the part is to be renewed is more than or equal to once for all of consecutive periods of the usage upper limit as Condition 1. In other words, Condition 1 becomes a condition of which a total value for all of the consecutive periods of the usage upper limit is more than or equal to 1.

For example, let the usage upper limit be 8 years. Then, for Condition 1, a total value from a first year to an eighth year becomes more than or equal to l, a total value from a second year to a ninth year becomes more than or equal to 1, and so on.

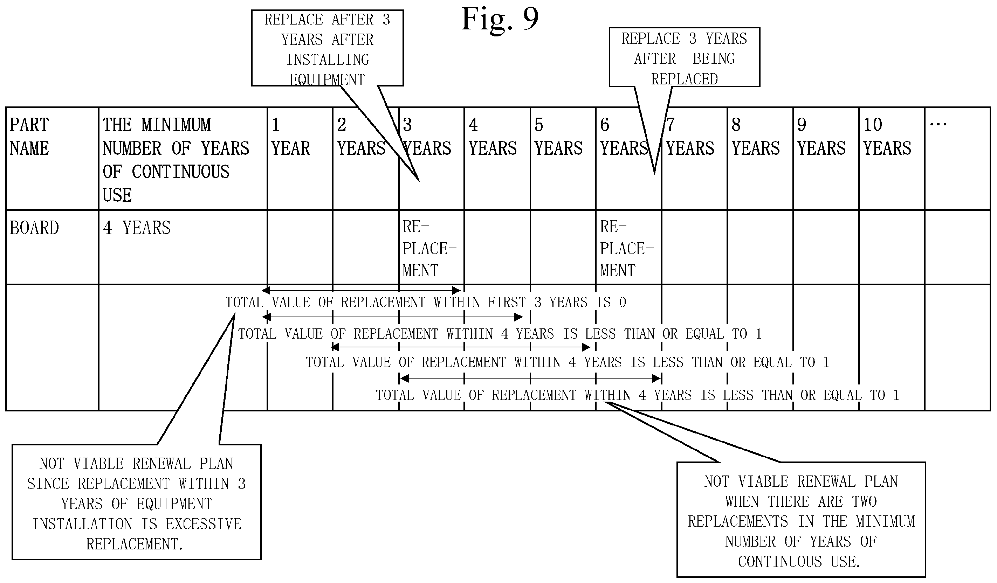

A setting method for Condition 2 of which the target part is to be renewed in the period that is more than or equal to the usage lower limit will be described by referring to Fig. 9.

The plan creation unit 21 sets a condition of which the number of times the part is to be renewed is less than or equal to once for all of consecutive periods of the usage lower limit as Condition 2. In other words, Condition 2 becomes a condition of which a total value for all of the consecutive periods of the usage lower limit is less than or equal to 1. After installation of the equipment, however, the equipment will not be renewed in a period before a first usage lower limit. Consequently, a total value for a period before the first usage lower limit after the installation of the equipment is 0.

For example, let the usage lower limit be 4 years. Then, for Condition 2, a total value from a first year to a fourth year becomes less than or equal to 1, a total value from a second year to the fourth year becomes less than or equal to 1, and so on. Condition 2 includes a condition of which a total value from the first year to a third year is 0.

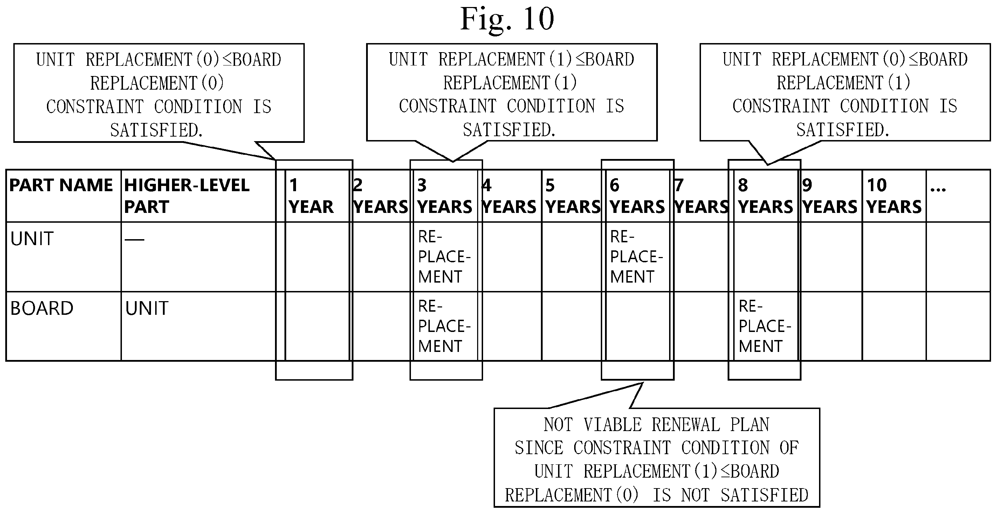

A setting method for Condition 3 of which in a case where there is the inclusion relationship, when the parent part is renewed, the child part is also renewed will be described by referring to Fig. 10.

The plan creation unit 21 sets a condition of which, in each year, a value of the parent part is less than or equal to a value of the child part as Condition 3.

For example, regard the board as the child part of the unit. In this case, Condition 3 becomes a condition of which a value of the unit is less than or equal to a value of the board in any year. For example, as in a sixth year, in a case where there is a year of which the value of the unit is 1 and the value of the board is 0, Condition 3 is not satisfied.

### *** Effects of Embodiment 1. ***

As described above, the renewal planning apparatus 10 according to Embodiment 1 sets each of the combinations of each of the plurality of upper limit ratios and each of the plurality of lower limit ratios as the target combination. Then, in the renewal planning apparatus 10 according to Embodiment 1, for the target combination, a renewal plan is created that renews a part in a period that is less than or equal to the usage upper limit that is a lifespan of the part multiplied by the upper limit ratio and more than or equal to the usage lower limit that is obtained by multiplying the lifespan of the part by the lower limit ratio. Thus, a plurality of renewal plans that support preferences of various users are created and presented.

The renewal planning apparatus 10 according to Embodiment 1, in a case where there is the inclusion relationship, creates a renewal plan that regards the child part as also being renewed when the parent part is renewed. Thus, an appropriate renewal plan is created for the plurality of parts that configure the equipment.

Since the renewal planning apparatus 10 according to Embodiment 1 automatically creates the plurality of renewal plans without human intervention, there will be no variation caused by creators of the renewal plans.

### *** Other Configurations ***

### <Variation 1.>

In Embodiment 1, in step S30 of Fig. 7, the plan creation unit 21 identified all the renewal plans in a case where the plurality of renewal plans are specified for one combination. The plan creation unit 21, however, may identify only some of the renewal plans.

As a specific example, the plan creation unit 21 may identify only a renewal plan with a criterion number of which a value of a weighted sum of the cost and the outage period is low. The cost here is the sum of the cost for the preventive maintenance and the cost for the failure handling. The outage period here is the sum of the outage period due to the preventive maintenance and the outage period due to the failure handling. The criterion number is a value that is more than or equal to 1. In a case where the criterion number is 1, only a best renewal plan is identified.

By changing the weights for the cost and the outage period, it is possible to identify a renewal plan that prioritizes low cost, a renewal plan that prioritizes short outage period, a renewal plan that balances cost and outage period, and the like. The plan creation unit 21 may identify renewal plans for a plurality of weights.

### <Variation 2.>

In Embodiment 1, each functional element was enabled by software. As Variation 2, however, each functional element may be enabled by hardware. Differing points from Embodiment 1 regarding this Variation 2 will be described.

In a case where each functional element is enabled by hardware, the renewal planning apparatus 10 includes an electronic circuit instead of the processor 11, the memory 12, and the storage 13. The electronic circuit is a dedicated circuit that enables functions of each functional element, the memory 12, and the storage 13.

A single circuit, a composite circuit, a programmed processor, a parallel programmed processor, a logic IC, a GA, an ASIC, and an FPGA are presumed to be the electronic circuit. GA is an abbreviation for Gate Array. ASIC is an abbreviation for Application Specific Integrated Circuit. FPGA is an abbreviation for Field-Programmable Gate Array.

Each functional element may be enabled by one electronic circuit, or each functional element may be enabled by being distributed to a plurality of electronic circuits.

### <Variation 3.>

As Variation 3, some of each functional element may be enabled by hardware, and the rest of each functional element may be enabled by software.

The processor 11, the memory 12, the storage 13, and the electronic circuit are called processing circuitry. That is, the functions of each functional element are enabled by the processing circuitry.

"Unit" in the above description may be replaced with "circuit", "step", "procedure", "process", or "processing circuitry".

### Embodiment 2.

Embodiment 2 differs from Embodiment 1 in that Embodiment 2 converts each outage period into a cost and gives a name to the renewal plan. In Embodiment 2, this differing point will be described, and descriptions on points that are same will be omitted.

### *** Description of Configuration ***

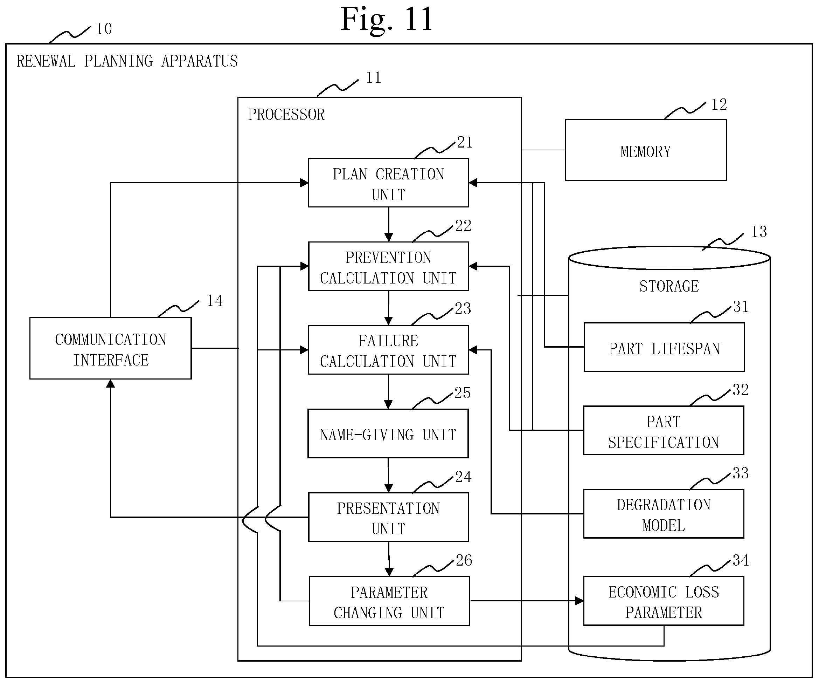

A configuration of a renewal planning apparatus 10 according to Embodiment 2 will be described by referring to Fig. 11.

The renewal planning apparatus 10 differs from the renewal planning apparatus 10 illustrated in Fig. 1 in that the renewal planning apparatus 10 includes a name-giving unit 25 and a parameter changing unit 26 as functional elements. Functions of the name-giving unit 25 and the parameter changing unit 26, similar to other functional elements, are enabled by software or hardware.

The renewal planning apparatus 10 differs from the renewal planning apparatus 10 illustrated in Fig. 1 in that an economic loss parameter 34 is stored in the storage 13. The economic loss parameter 34 is a parameter for converting the outage period into a cost.

### *** Description of Operation ***

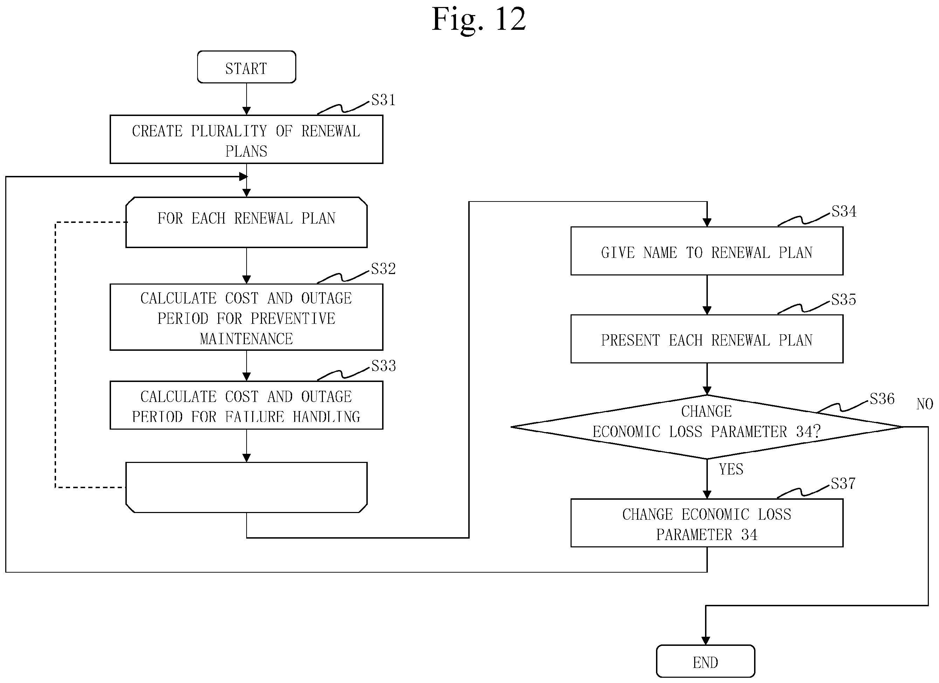

A flow of a process of the renewal planning apparatus 10 according to Embodiment 2 will be described by referring to Fig. 12.

A process of step S31 is a same as the process of step S11 of Fig. 2.

Processes of step S32 and step S33 are executed with each of the renewal plans that are created in step S31 as a target.

### (Step S32: Prevention Calculation Process)

Similar to Embodiment 1, the prevention calculation unit 22 calculates the cost and the outage period for the preventive maintenance in a case where the plurality of parts that configure the equipment are renewed in the target renewal plan.

The prevention calculation unit 22, based on the economic loss parameter 34, converts the outage period that is calculated into a cost.

### (Step S33: Failure Calculation Process)

Similar to Embodiment 1, the failure calculation unit 23 calculates the cost and the outage period for the failure handling in a case where the plurality of parts that configure the equipment are renewed in the target renewal plan.

The failure calculation unit 23 converts the outage period that is calculated into a cost based on the economic loss parameter 34.

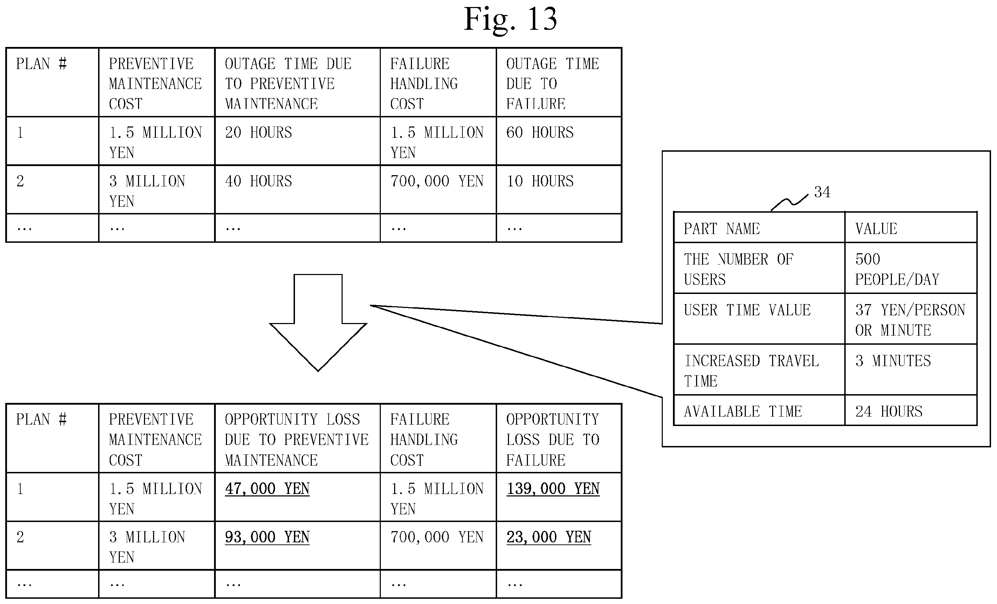

A specific example of a method of converting the outage period into a cost at step S32 and step S33 will be described by referring to Fig. 13. Here, a case where the prevention calculation unit 22 converts the outage period into a cost at step S32 will be described. A case where the failure calculation unit 23 converts the outage period into a cost at step S33, however, is a same.

In Fig. 13, the number of users, a user time value, increased travel time, and available time are stored as the economic loss parameter 34. Here, let an opportunity loss (yen) = user time value (yen per person or minute) × increased travel time (minute) × the number of users (the number of people per day) × outage time due to failure/24×24/ available time.
(1) A value per person (yen per person) due to increased travel is calculated by "user time value (yen per person or minute) × increased travel time (minute)". (2) A value of users as a whole (yen per day) due to the increased travel time per day is calculated by "(1) × the number of users". (3) The value of users as a whole (yen) due to the increased travel time is calculated by "(2) × outage time due to failure/24". (4) A value that has been multiplied by an effect of the available time is calculated by "(3) × 24/available time". For example, when the outage time due to the failure is 10 hours, how significant the effect is differs depending on whether the equipment is being stopped for 10 hours out of 12 available hours or the equipment is being stopped for 10 hours out of 24 available hours. Therefore, a degree of the effect is calculated by "24/available time".

In Fig. 13, by this calculation, the outage period due to the preventive maintenance in each of the renewal plans is converted into a cost, and set as an opportunity loss due to the preventive maintenance. Similarly, the outage period due to the failure handling in each of the renewal plans is converted into a cost, and is set as an opportunity loss due to the failure handling.

### (Step S34: Name-Giving Process)

The name-giving unit 25, for the plurality of renewal plans, gives names in accordance with a combination of a total amount of the cost for the preventive maintenance and an amount of money of which the outage period for the preventive maintenance is converted, and a total amount of the cost for the failure handling and the amount of money of which the outage period for the preventive maintenance is converted.

Specifically, the name-giving unit 25 prepares a plurality of sets of a name and a naming rule. The name-giving unit 25 identifies a renewal plan that matches the naming rule of each set from the plurality of renewal plans. Then, the name-giving unit 25 gives a name of a same set as the naming rule to the renewal plan that is identified. In this case, there is a possibility that a name is given only to some of the renewal plans, and a name is not given to the rest of the renewal plans.

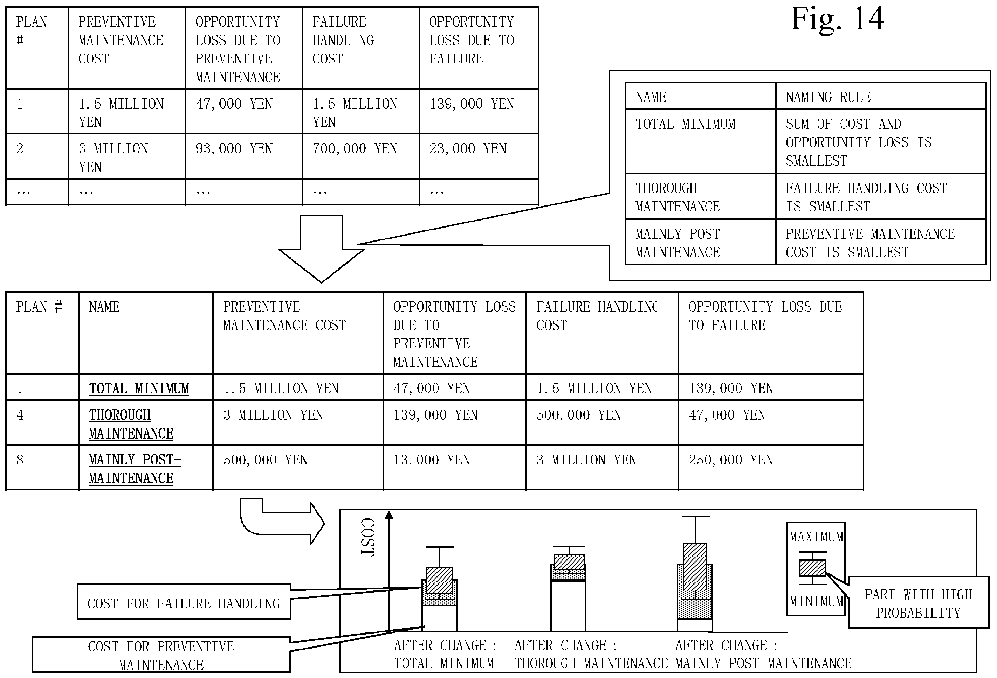

In Fig. 14, three names, total minimum, thorough maintenance, and mainly post-maintenance, are set.

A rule of which a sum of the cost and the opportunity loss is smallest is set as a naming rule to the name, total minimum. The cost here is the sum of the cost for the preventive maintenance and the cost for the failure handling. The opportunity loss here is a sum of the opportunity loss for the preventive maintenance and the opportunity loss for the failure handling. The name-giving unit 25 identifies a renewal plan of which the sum of the cost and the opportunity loss is smallest from the plurality of renewal plans, and gives the name, total minimum, to the renewal plan that is identified.

A rule of which the failure handling cost is smallest is set as a naming rule to the name, thorough maintenance. The failure handling cost here is a sum of the cost and the opportunity loss due to the failure handling. The name-giving unit 25 identifies a renewal plan of which the sum of the cost and the opportunity loss due to the failure handling is smallest from the plurality of renewal plans, and gives the name, thorough maintenance, to the renewal plan that is identified.

A rule of which the preventive maintenance cost is smallest is set as a naming rule to the name, mainly post-maintenance. The preventive maintenance cost here is a sum of the cost and the opportunity loss due to the preventive maintenance. The name-giving unit 25 identifies a renewal plan of which the sum of the cost and the opportunity loss due to the preventive maintenance is smallest from the plurality of renewal plans, and gives the name, mainly post-maintenance, to the renewal plan that is identified.

### (Step S35: Presentation Process)

The presentation unit 24, as illustrated in Fig. 14, the presentation unit 24 presents each of the renewal plans that are created in step S31. At this time, the presentation unit 24 presents, for each of the renewal plans, the cost for the preventive maintenance and an opportunity loss that is the outage period converted into a cost that are calculated in step S32, and the cost for the failure handling and an opportunity loss that is the outage period converted into a cost that are calculated in step S33. As for the renewal plan to which a name is given, the presentation unit 24 presents the name that is given.

The presentation unit 24 may present, for each of the renewal plans, the name, the cost for the preventive maintenance, and the cost for the failure handling, along with indicating a fluctuation range of the cost for the failure handling. The cost for the failure handling is calculated using the degradation model 33. The degradation model 33 is a model that indicates the occurrence probability of a failure. Consequently, when the cost for the failure handling that may occur at a higher than or equal to a certain probability is to be found, and not a cost that occurs at a highest probability, there will a certain range. Therefore, the presentation unit 24 may present a range of the cost for the failure handling. The presentation unit 24 may indicate a maximum value and a minimum value of the cost for the failure handling, and a part with a higher probability than a standard.

### (Step S36: Parameter Change Determination Process)

The parameter changing unit 26 determines whether or not a change in the economic loss parameter 34 is necessary.

Specifically, the parameter changing unit 26 determines whether or not a change in the economic loss parameter 34 has been instructed by the user. In a case where the change in the economic loss parameter 34 has been instructed, the parameter changing unit 26 proceeds with the process to step S37. On the other hand, in a case where the change in the economic loss parameter 34 has not been instructed, the parameter changing unit 26 ends the process.

### (Step S38: Parameter Changing Process)

The parameter changing unit 26 changes the economic loss parameter 34 following the user's instruction. Then, the parameter changing unit 26 returns the process to step S32. In step S32 and step S33, it is sufficient to perform only the process of converting the outage period into a cost.

### *** Effects of Embodiment 2. ***

As described above, the renewal planning apparatus 10 according to Embodiment 2 presents, for each of the renewal plans, the cost by converting the outage period into the cost. Thus, the plurality of renewal plans can be compared solely based on the cost, and comparison becomes easier. Consequently, a renewal plan that suits the user's preference becomes easier to be selected from the plurality of renewal plans.

The renewal planning apparatus 10 according to Embodiment 2 gives a name to the renewal plan based on the naming rule. Thus, since a general characteristic of the renewal plan can be understood by only its name, selecting a renewal plan that suits the user's preference from the plurality of renewal plans becomes easier.

### Embodiment 3.

Embodiment 3 differs from Embodiments 1 and 2 in that Embodiment 3 presents a new renewal plan in a case where part renewal that is out of plan has been implemented or part renewal according to plan has not been implemented. In Embodiment 3, this differing point will be described, and descriptions on points that are same will be omitted.

In Embodiment 3, a case where functions are added to Embodiment 1 will be described. It is possible, however, to add functions to Embodiment 2.

### *** Description of Configuration ***

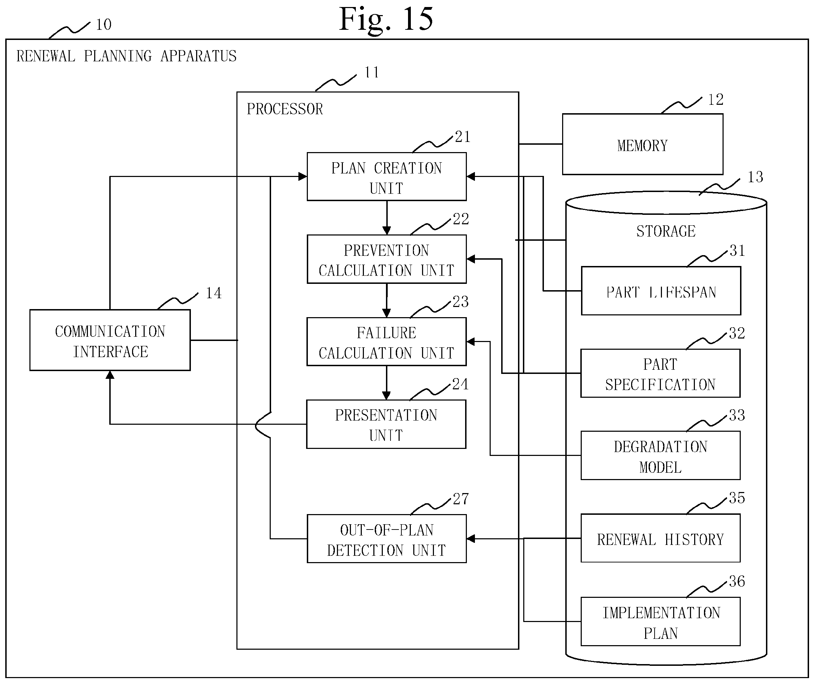

A configuration of a renewal planning apparatus 10 according to Embodiment 3 will be described by referring to Fig. 15.

The renewal planning apparatus 10 differs from the renewal planning apparatus 10 illustrated in Fig. 1 in that the renewal planning apparatus 10 includes an out-of-plan detection unit 27 as a functional element. Functions of the out-of-plan detection unit 27, similar to other functional elements, are enabled by software or hardware.

The renewal planning apparatus 10 differs from the renewal planning apparatus 10 illustrated in Fig. 1 in that a renewal history 35 and an implementation plan 36 are stored in the storage 13. The renewal history 35 is history information of the renewal of each part. The implementation plan 36 is a renewal plan that is adopted.

### *** Description of Operation ***

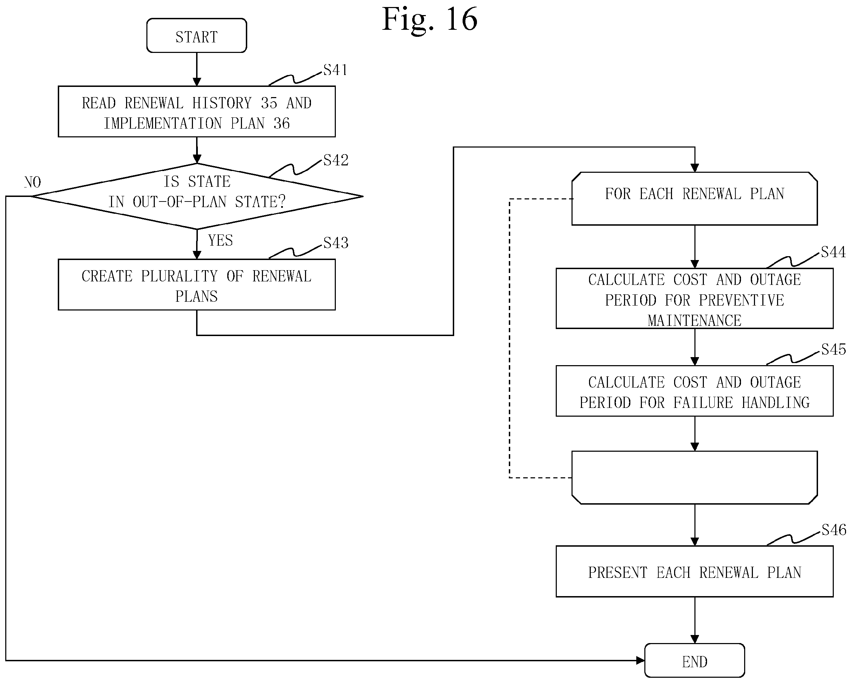

A flow of a process of the renewal planning apparatus 10 according to Embodiment 3 will be described by referring to Fig. 16.

### (Step S41: Information Reading Process)

The out-of-plan detection unit 27 reads the renewal history 35 and the implementation plan 36.

### (Step S42: Out-of-Plan Detection Process)

The out-of-plan detection unit 27 determines whether or not there are points in the renewal history of the part that the renewal history 35 indicates that is not according to plan that the implementation plan 36 indicates. Specifically, the out-of-plan detection unit 27 determines whether or not renewal of a part that is out of plan that the implementation plan 36 indicates is performed, or whether or not a state is in an out-of-plan state where renewal of a part has not been performed according to the plan that the implementation plan 36 indicates. The renewal of the part that is out of plan is performed means that any one of the plurality of parts is renewed at timing that is not scheduled to be renewed in the implementation plan 36. The renewal of the part not being performed according to plan means that any one of the plurality of parts is not renewed at timing that is scheduled to be renewed in the renewal plan.

In a case where the state is in the out-of-plan state, the out-of-plan detection unit 27 proceeds with the process to step S43, and re-creates the renewal plan. On the other hand, in a case where the state is not in the out-of-plan state, the out-of-plan detection unit 27 ends the process.

### (Step S43: Plan Creation Process)

The plan creation unit 21, similar to step S11 of Fig. 2, creates the plurality of renewal plans. The plan creation unit 21, however, creates the plurality of renewal plans by taking into consideration the number of elapsed years after the renewal of each part. That is, in Embodiment 1, the plurality of renewal plans were created based on a premise that all parts are new. In Embodiment 3, however, since there is a possibility that each part has been used for a certain period, the plurality of renewal plans are created taking this into consideration. Specifically, the plan creation unit 21, for each part, may perform determination of the usage upper limit and the usage lower limit with a most recent renewal point in time as a standard.

Processes of step S44 and step S45 are same as the processes of step S12 and step S13 of Fig. 2.

### (Step S46: Presentation Process)

The presentation unit 24, similar to step S14 of Fig. 2, presents each of the renewal plans that are created in step S41, and for each of the renewal plans, the cost and the outage period for the preventive maintenance, and the cost and the outage period for the failure handling.

At this time, the presentation unit 24 may, present the cost and the outage period for the preventive maintenance and the cost and the outage period for the failure handling of a case where the implementation plan 36 is implemented. The presentation unit 24 may present a difference between each of the cost and the outage period for the preventive maintenance and the cost and the outage period for the failure handling, and for each of the renewal plans that are created in step S41, in a case where the implementation plan 36 is implemented.

### *** Effects of Embodiment 3. ***

As described above, the renewal planning apparatus 10 according to Embodiment 3 presents a new renewal plan in a case where the part renewal that is out of plan has been implemented or the part renewal according to plan has not been implemented. Thus, an appropriate renewal plan becomes possible to be adopted taking an occurrence of the out-of-plan state into consideration. As a result, reducing at least one of the cost and the outage period becomes possible.

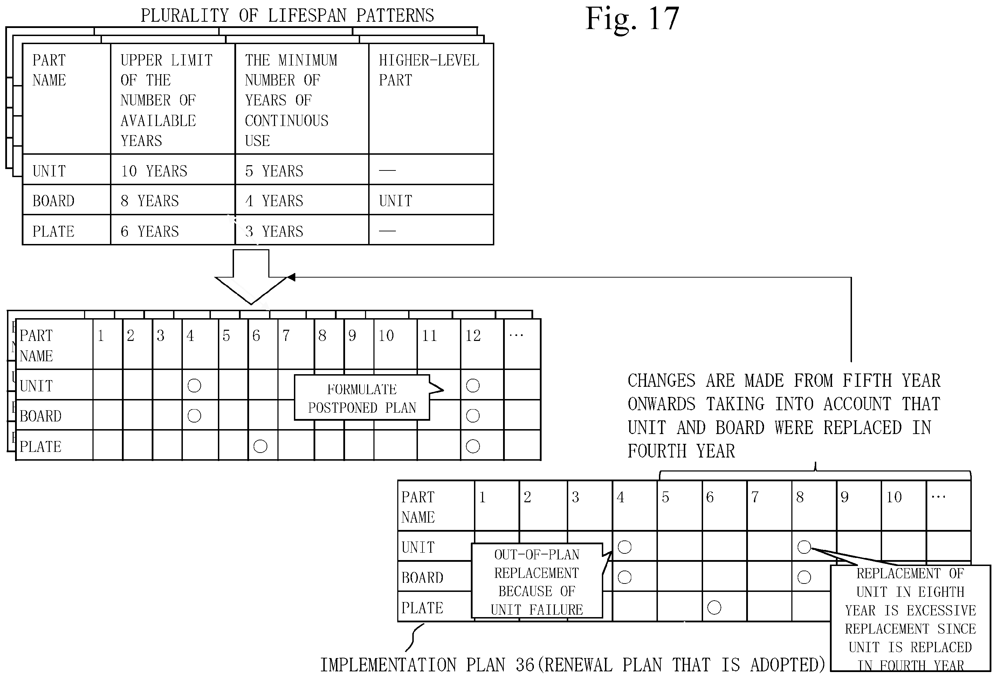

The effects of Embodiment 3 will be specifically described by referring to Fig. 17.

Similar to the example of Fig. 3, a unit, a board, and a plate are in Fig. 17 as the parts that configure the equipment. A lifespan of the unit is 10 years, a lifespan of the board is 8 years, and a lifespan of the plate is 6 years. The unit is a parent part of the board.

Regard the unit as failed in a fourth year and renewal of the unit that is out of plan occurred. In this case, in the implementation plan 36, renewal of the unit is scheduled for an eighth year. Since, the unit, however, has been renewed in the fourth year, the renewal of the unit in the eighth year becomes excessive. Therefore, the plan creation unit 21 creates a new renewal plan in a case where the unit in the fourth year is renewed. For example, the plan creation unit 21 creates a renewal plan that performs renewal of the unit and the board in a twelfth year that is eight years after the renewal of the unit in the fourth year. Thus, excessive renewal is prevented and an occurrence of a cost of the preventive maintenance and the like that are more than necessary can be prevented.

With regard to the plate, even in the new renewal plan, the plate is scheduled to be renewed in a sixth year similar to the implementation plan 36. This is because four years have already elapsed with regard to the plate at a point in time when the new renewal plan is to be created.

### *** Other Configurations ***

### <Variation 4.>

As described in Embodiment 2, the renewal planning apparatus 10 includes the name-giving unit 25, and the name-giving unit 25 may give a name to each of the renewal plans that are newly created. Then, the presentation unit 24 may present each of the renewal plans to which names are given, along with a current plan.

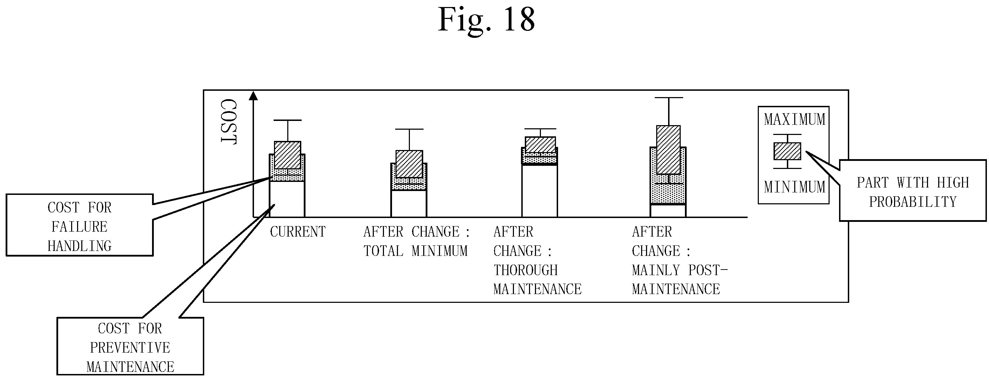

At this time, as illustrated in Fig. 18, the presentation unit 24 may present, for each of the renewal plans, the cost for the preventive maintenance and the cost for the failure handling, along with indicating the fluctuation range of the cost for the failure handling.

### <Variation 5.>

In a case where renewal of equipment is nearing, the plan creation unit 21 may create a renewal plan for a case where the equipment is continued to be used without being renewed. Thus, the prevention calculation unit 22 and the failure calculation unit 23 calculate a cost and an outage period for the case where the equipment is continued to be used without being renewed. Then, the presentation unit 24 presents the cost and the outage period that are calculated. At this time, the presentation unit 24 may present a cost of a case where the equipment is renewed, together with the cost and the outage period that are calculated. Thus, comparing and examining the case where the equipment is renewed with the case where the equipment is not renewed will be possible.

As described in Embodiment 2, the prevention calculation unit 22 and the failure calculation unit 23 may convert the outage period into a cost. Thus, comparing and examining the case where the equipment is renewed with the case where the equipment is not renewed will be possible from a cost perspective.

The embodiments and variations of the present disclosure have been described above. Of these embodiments and variations, some may be executed in combination. Any one of or some of the embodiments and the variations may partially be executed. The present disclosure is not to be limited to the above embodiments and variations, and various changes are possible as necessary.

### Reference Signs List

10: renewal planning apparatus; 11: processor; 12: memory; 13: storage; 14: communication interface; 21: plan creation unit; 22: prevention calculation unit; 23: failure calculation unit; 24: presentation unit; 25: name-giving unit; 26: parameter changing unit; 27: out-of-plan detection unit; 31: part lifespan; 32: part specification; 33: degradation model; 34: economic loss parameter; 35: renewal history; 36: implementation plan.

## Claims

1. A renewal planning apparatus comprising:
a plan creation unit to create a renewal plan that indicates renewal timing of each of a plurality of parts that configure equipment for each of combinations of each of a plurality of upper limit ratios and each of a plurality of lower limit ratios, and with each of the plurality of parts as a target part, to create a renewal plan to which renewal timing of the target part is set in a period less than or equal to a usage upper limit that is obtained by multiplying a lifespan of the target part by an upper limit ratio in a target combination, and that is more than or equal to a usage lower limit that is obtained by multiplying the lifespan of the target part by a lower limit ratio in the target combination; and
a presentation unit to present, for each of the combinations, the renewal plan that is created by the plan creation unit.

2. The renewal planning apparatus according to claim 1, wherein
in the plurality of parts, for at least some of parts, there is an inclusion relationship where a parent part that is a certain part includes a child part that is a different part, and
the plan creation unit, in a case where there is the inclusion relationship, creates the renewal plan that regards the child part as also being renewed when the parent part is renewed.

3. The renewal planning apparatus according to claim 2, wherein
the plan creation unit, having each of the combinations as a target, creates the renewal plan for a target combination by identifying a plan that satisfies constraint conditions, the constraint conditions being Condition 1 of which the number of times a part is to be renewed is more than or equal to once for all of consecutive periods of the usage upper limit, Condition 2 of which the number of times a part is to be renewed is less than or equal to once for all of consecutive periods of the usage lower limit, and Condition 3 of which in a case where there is the inclusion relationship, when the parent part is renewed, the child part is also renewed.

4. The renewal planning apparatus according to any one of claims 1 to 3 further comprising:
a prevention calculation unit, for each of renewal plans that are created by the plan creation unit, to calculate a cost and an outage period for preventive maintenance in a case where the plurality of parts are renewed in the renewal plan; and
a failure calculation unit, for each of the renewal plans, to calculate a cost and an outage period for failure handling in a case where the plurality of parts are renewed in the renewal plan, wherein
the presentation unit, for each of the renewal plans, presents the cost and the outage period due to the preventive maintenance, and the cost and the outage period due to the failure handling.

5. The renewal planning apparatus according to claim 4, wherein
the prevention calculation unit, for each of the renewal plans, converts the outage period of the preventive maintenance into an amount of money,
the failure calculation unit, for each of the renewal plans, converts the outage period of the failure management into an amount of money, and
the presentation unit, for each of the renewal plans, presents the amount of money of which the outage period for the preventive maintenance is converted, and the amount of money of which the outage period for the failure handling is converted.

6. The renewal planning apparatus according to claim 5 further comprising:
a name-giving unit, for each of the renewal plans, to give a name in accordance with a combination of a total amount of a cost for the preventive maintenance and an amount of money of which the outage period is converted, and a total amount of a cost for the failure handling and an amount of money of which the outage period is converted, wherein
the presentation unit, for each of the renewal plans, presents the name that is given by the name-giving unit.

7. The renewal planning apparatus according to any one of claims 1 to 6, wherein
the plan creation unit, in a case where any one of the plurality of parts is renewed at timing that is not scheduled to be renewed in the renewal plan that is adopted, and in a case where any one of the plurality of parts is not renewed at timing that is scheduled to be renewed in the renewal plan that is adopted, re-creates the renewal plan for each of the combinations.

8. A renewal planning method comprising:
creating a renewal plan that indicates renewal timing of each of a plurality of parts that configure equipment for each of combinations of each of a plurality of upper limit ratios and each of a plurality of lower limit ratios, and with each of the plurality of parts as a target part, creating a renewal plan to which renewal timing of the target part is set in a period less than or equal to a usage upper limit that is obtained by multiplying a lifespan of the target part by an upper limit ratio in a target combination, and that is more than or equal to a usage lower limit that is obtained by multiplying the lifespan of the target part by a lower limit ratio in the target combination, by a computer; and
presenting, for each of the combinations, the renewal plan, by the computer.

9. A renewal planning program that causes a computer to function as a renewal planning apparatus that performs:
a plan creation process to create a renewal plan that indicates renewal timing of each of a plurality of parts that configure equipment for each of combinations of each of a plurality of upper limit ratios and each of a plurality of lower limit ratios, and with each of the plurality of parts as a target part, to create a renewal plan to which renewal timing of the target part is set in a period less than or equal to a usage upper limit that is obtained by multiplying a lifespan of the target part by an upper limit ratio in a target combination, and that is more than or equal to a usage lower limit that is obtained by multiplying the lifespan of the target part by a lower limit ratio in the target combination; and
a presentation process to present, for each of the combinations, the renewal plan that is created by the plan creation process.
